Europäisches Patentamt

European Patent Office

Office européen des brevets

(11) Numéro de publication : **0 397 228 B1**

(12) **FASCICULE DE BREVET EUROPEEN**

(19)

(45) Date de publication du fascicule du brevet :
**23.12.92 Bulletin 92/52**

(21) Numéro de dépôt : **90200972.9**

(22) Date de dépôt : **19.04.90**

(51) Int. Cl.⁵ : **A23L 3/34,** A23C 19/06

(54) **Procédé de décontamination d'un produit alimentaire non liquide, en particulier de fromage, et composition à cet effet.**

(30) Priorité : **12.05.89 FR 8906669**

(43) Date de publication de la demande :
**14.11.90 Bulletin 90/46**

(45) Mention de la délivrance du brevet :
**23.12.92 Bulletin 92/52**

(84) Etats contractants désignés :
**AT BE CH DE DK ES FR GB GR IT LI LU NL SE**

(56) Documents cités :
**EP-A- 0 290 410
WO-A-87/07838
CA-A- 1 087 019
DE-A- 2 709 390
FR-A- 2 573 982**

(56) Documents cités :
**FR-A- 2 584 727
FOOD TECHNOLOGY, vol. 43, no. 1, janvier
1989, pages 134-142, Chicago, Ill., US; L.R.
BEUCHAT et al.: "Antimicrobialsoccurring
naturally in foods"**

(73) Titulaire : **BIO SERAE LABORATOIRES SA
2, rue des Tendes
F-12400 Saint Affrique (FR)**

(72) Inventeur : **Degre, Michel François
Domaine de Las Tapios Montolieu
F-11170 Alzonne (FR)**

(74) Mandataire : **Barre, Philippe
Cabinet Barre-Gatti-Laforgue 95 rue des
Amidonniers
F-31069 Toulouse Cédex (FR)**

Jouve, 18, rue Saint-Denis, 75001 PARIS

EP 0 397 228 B1

## Description

L'invention concerne un procédé de traitement d'un produit alimentaire non liquide, par exemple fromages, viandes, poissons, produits végétaux..., en vue d'assurer sa décontamination microbienne en particulier vis-à-vis des bactéries du genre Listéria.

On sait que les produits alimentaires sont fréquemment l'objet de contaminations microbiennes, provenant notamment des conditions dans lesquelles ils sont actuellement manipulés, transportés et conservés. Par exemple, on a pu démontrer que la généralisation du stockage à froid de ces produits (à des températures de l'ordre de 5° C) réduit le développement naturel de certains agents inhibiteurs qui s'opposaient à la prolifération microbienne. Ainsi, beaucoup de produits alimentaires sont porteurs de germes au moment de leur conditionnement quelles que soient les précautions prises. En particulier, les bactéries du genre Listéria ont récemment produit des intoxications graves, notamment par ingestion de fromages et de viandes contaminés. Actuellement, à l'exception de traitements thermiques drastiques, on ne sait pas éliminer ces bactéries des produits alimentaires par des moyens non dénaturants, compatibles avec la consommation ultérieure desdits produits ; il est à noter à cet égard que les opérations classiques de salaison des viandes ou des fromages préservent les produits de la plupart des microbes gênants, mais n'ont pas d'effet sensible sur le développement de certaines bactéries notamment bactéries du genre Listéria (et également Yersinia, Campylobacter).

Par ailleurs, la demande internationale WO 87/07838 décrit un procédé de conditionnement d'une composition antibactérienne (système LP) visant à en isoler les composants pour obtenir un effet différé. Toutefois, ce document ne fournit aucun enseignement directement applicable au problème sus-évoqué.

La présente invention se propose de fournir un procédé de traitement des produits alimentaires non liquides, notamment fromages, viandes, viandes transformées (pâtés...), poissons, végétaux frais... en vue de les décontaminer de façon très poussée vis-à-vis des microbes susceptibles de se développer sur ces produits, en particulier bactéries du genre Listéria, Yersinia, Campylobacter, groupe des entéro-bactéries, staphylocoques, pseudomonas..., et ce, en l'absence de toute dénaturation du produit sans aucun risque pour le consommateur.

Un autre objectif est, dans les cas des fromages, de réaliser une décontamination qui préserve la flore typique de surface de ces fromages, par exemple la flore microbienne constitutive de la morge (bacterium linens) dans le cas des fromages à morge.

Le procédé de traitement conforme à l'invention peut s'appliquer à tout produit alimentaire hydraté contenant au moins 20 % d'eau ; il consiste à déposer sur la surface dudit produit hydraté une préparation dite système LP , comprenant un mélange d'enzyme lactopéroxydase, de thiocyanate et d'un donneur d'oxygène. Ce dépôt peut être effectué sous forme liquide par imprégnation de la surface du produit au moyen d'une phase aqueuse contenant le système LP (pulvérisation, immersion dans un bain...) ou à sec en saupoudrant la surface du produit au moyen d'une poudre contenant les composants du système LP.

Dans le cas d'un produit alimentaire appelé à être conditionné au contact d'un emballage (fromages blancs...), le système LP peut être déposé sur l'emballage qui servira de vecteur lors du conditionnement.

Les expérimentations de microbiologie effectuée en laboratoire, de même que les essais sur des échantillons de produits alimentaires ont montré que le système LP précité assurait une très efficace destruction des Listérias et de tous les germes pathogènes habituellement présents dans les produits alimentaires, et ce, en quelques heures ou en quelques jours selon les doses mises en oeuvre. Ce système LP déposé à la surface du produit alimentaire hydraté (fromage, viande...) emprunte l'eau dudit produit, d'abord au moment de la mise en contact (ce qui permet une mise en activité du système en cas de dépôt sous forme de poudre), puis au cours du temps de sorte que l'activité du système se prolonge sur de très longues périodes. La réaction enzymatique qui se produit à la surface du produit solide est surprenante en l'état actuel des connaissances enzymologiques, car il est bien connu que les seules réactions enzymatiques énergiques (c'est-à-dire bénéficiant d'une vitesse élevée) sont obtenues en milieu liquide aqueux, les réactions enzymatiques dans les matériaux solides étant toujours très lentes et peu efficaces. Il est ainsi très inattendu que le système LP qui est par ailleurs connu puisqu'il se développe naturellement dans le lait (avec la xanthine oxydase comme donneur d'oxygène) soit apte à décontaminer un produit alimentaire solide par un simple traitement de surface, et au surplus à détruire des bactéries aussi résistantes que les bactéries du genre Listéria.

Le système LP est strictement non toxique et parfaitement compatible avec un usage alimentaire puisqu'il se trouve contenu dans certaines sécrétions des mammifères (salive, lait...).

Le donneur d'oxygène du système peut être un péroxyde, les proportions préférentielles étant alors les suivantes, rapportées à 1 g d'enzyme lactopéroxydase : entre 1 et 4 g de thiocyanate et une quantité de péroxyde capable de libérer entre 0,4 et 2 g d'oxygène moléculaire.

Le donneur d'oxygène peut aussi être le système glucose-oxydase, les proportions préférentielles étant alors les suivantes, rapportées à 1 g d'enzyme lactopéroxydase : entre 1 et 4 g de thiocyanate et entre 0,050 et 0,100 g de glucose-oxydase.

Les essais ont mis en évidence que l'efficacité du système LP est bonne en effectuant le dépôt en quantité telle que le poids d'enzymes lactopéroxydase soit au moins égal à $2.10^{-4}$ mg par $cm^2$ de surface du produit alimentaire. En pratique pour limiter les coûts, on déposera le système LP de sorte que la quantité de lactopéroxydase soit comprise entre $2.10^{-4}$ et $35.10^{-4}$ mg par $cm^2$ de produit alimentaire.

Dans le cas d'un dépôt sous forme liquide, le système LP peut éventuellement être préalablement mélangé à d'autres agents, notamment : sel tampon régulateur de pH, (citrate, phosphate, acétate...) ou sel d'ionisation (NaCl, KCl,...) qui permettent d'obtenir une phase aqueuse présentant les conditions optimales de stabilité du système LP (pH autour de 5,5, pouvoir ionique correspondant à 10 g de NaCl par l.) ; agent mouillant (sucre-ester) pour améliorer le contact de la phase aqueuse avec la surface du produit alimentaire et obtenir une bonne homogénéité du traitement ; agent fixateur filmogène (méthylcellulose, carboxy-méthylcellulose, acétate ou propionate de polyvinyle...) en vue de mieux fixer le système LP sur la surface du produit alimentaire.

Il est également possible d'associer au système LP des composés actifs, notamment lactoferrine LF ou lysozyme qui apporte une activité anti-microbienne complémentaire et réalise un effet de synergie avec le système LP dans la destruction des bactéries, en particulier des bactéries du genre Listéria comme l'ont montré les études de microbiologies. Egalement un ou des agents fongicides, en particulier natamycine, acide sorbique et ses sels peuvent être ajoutés au système pour lui conférer un effet fongicide.

L'invention s'étend à des applications particulières des procédés sus-définis, en particulier pour décontaminer les fromages vis-à-vis des bactéries du genre Listéria.

De préférence, le système LP à déposer sur la surface du fromage est mis en solution et/ou en suspension dans une phase aqueuse en concentration telle que le poids de lactopéroxydase par litre d'eau soit compris entre 10 et 500 mg.

Dans le cas d'un fromage soumis au cours de sa fabrication à une opération de salage précédant une période de maturation, le traitement de surface au moyen du système LP est effectué au moins une fois au cours de la période de maturation.

Lorsqu'il s'agit d'un fromage à période de maturation longue supérieure à 30 jours, l'on applique de préférence un premier traitement de surface dans un délai compris entre 10 et 20 jours après salage, et au moins un autre traitement avent emballage.

L'invention s'applique très favorablement pour traiter des fromages, dits fromages à morge, comprenant une pâte molle ou une pâte pressée, à flore microbienne de surface. Les essais ont montré que la flore microbienne de ces fromages n'était pas sensiblement affectée par le traitement, de sorte que les caractéristiques du fromage ne sont pas modifiées.

Le procédé peut s'appliquer à tout autre produit alimentaire hydraté pour lequel un problème de contamination notamment par les bactéries du genre Listéria peut se poser, en particulier : viandes (pièces de viandes, carcasses, viandes hachées...) ou de charcuterie, poissons (filets de poissons, poissons entiers), crustacés, végétaux après récolte.

Le système LP utilisé dans l'invention peut être fabriqué à partir d'une préparation-mère comprenant essentiellement un mélange d'enzyme lactopéroxydase, de thiocyanate notamment thiocyanate de potassium, et un donneur d'oxygène, avec le cas échéant des additifs : lactoferrine LP, composés fongicides, sels tampons, sels d'ionisation, agents mouillants, agents fixateurs...

La lactopéroxydase est actuellement extraite du lait ou du lactosérum par des procédés traditionnels de chromatographie. Le thiocyanate est un composé disponible sur le marché ; le thiocyanate de potassium est choisi de préférence en raison de sa solubilité et de son faible coût. Le donneur d'oxygène peut être un péroxyde d'hydrogène, de magnésium, ou un perborate, qui sont des composés courants disponibles sur le marché. Il peut également être un système enzymatique : glucose-oxydase, qui est disponible dans le commerce et peut être utilisé après purification de l'enzyme par chromatographie.

La préparation-mère sus-visée se présente sous la forme d'une poudre ou d'un liquide concentré, qui est utilisé après dilution soit dans un autre agent pulvérulent (poudre) soit dans une phase aqueuse (liquide concentré).

De préférence, le donneur d'oxygène de cette préparation-mère est isolé des autres constituants afin d'éviter une réaction prématurée, les constituants n'étant mis en contact que peu de temps avant l'opération de traitement de surface. L'isolement peut s'effectuer très simplement par conditionnement séparé des produits (sachets séparés pour la poudre, compartiments séparés dans le cas du liquide). Dans le cas de la poudre, il est également possible d'isoler le donneur d'oxygène par le procédé décrit dans la demande de brevet français n° 2.600.250, la mise en contact des composants s'effectuant par hydrosolubilisation.

Dans le cas d'une préparation-mère liquide, celle-ci peut aussi être mise en solution dans un polyalcool anhydre, notamment du glygérol, qui bloque la réaction enzymatique, celle-ci étant libérée par mise en solution aqueuse.

La description qui suit fournit un résumé des études microbiologiques effectuées ainsi que des exemples d'expérimentation dans le cas de fromages.

1/ Etudes microbiologiques

Ces études ont eu pour objet de vérifier et de quantifier les activités bactéricides, in vitro, de deux systèmes LP (LP1, LP2) fabriqués extemporanément à partir d'une poudre lyophilisée de lactopéroxydase mise en solution aqueuse à des doses variables avec les autres constituants.

Composition LP1

    - lactopéroxydase : doses en mg/l : 0,5 ou 1, ou 5, ou 10,
    - thiocyanate de potassium : 25 mg/l,
    - glucose-oxydase : 1 mg/l.

Composition LP2

    - lactopéroxydase : doses en mg/l : 5 ou 1 ou 0,5 ,
    - thiocyanate de potassium : 25 mg/l,
    - glucose-oxydase : 1 mg/l,
    - lactoferrine : 50 mg/l.

Ces systèmes ont été mis au contact de suspensions microbiennes à raison de $5.10^5$ à $7.10^6$ micro-organismes par ml de composition. L'incubation a duré 4 heures à une température de 37° C, suivie d'un dénombrement bactérien. Le tableau ci-dessous résume les résultats obtenus avec les différentes souches.

EP 0 397 228 B1

| Famille bactérienne | LP1 (0,5) | LP1 (1) | LP1 (5) | LP1 (10) | LP2 (0,5) | LP2 (1) | LP2 (5) |
|---|---|---|---|---|---|---|---|
| Listéria | 0 | 0 | ++ | ++++ | 0 | + | +++ |
| Yersinia | 0 | ++ | ++++ | ++++ | 0 | ++ | ++++ |
| Campylobacter | 0 | 0 | ++ | ++++ | 0 | + | +++ |
| Staphylococcus | 0 | + | ++++ | ++++ | 0 | ++ | ++++ |
| Streptococcus | ++ | +++ | ++++ | ++++ | ++ | +++ | ++++ |
| Salmonella | 0 | + | ++++ | ++++ | + | ++ | ++++ |
| E. coli | 0 | + | +++ | ++++ | 0 | ++ | ++++ |
| Pseudomonas | 0 | 0 | ++ | ++++ | 0 | + | +++ |
| Vibrio | 0 | ++ | ++++ | ++++ | + | ++ | ++++ |

Pour chaque famille de bactéries, on a expérimenté plusieurs souches (entre 2 et 5) provenant de collections différentes. Les résultats ont été homogènes et la moyenne est portée dans le tableau. Par exemple pour la Listéria, trois souches différentes ont été expérimentées, provenant d'isolements réalisés à partir d'un ensilage végétal, et de deux produits laitiers.

+ : signifie une réduction du nombre de bactéries d'un facteur 10 par rapport au témoin (existence d'une activité dont l'intensité demeure faible),

++ : idem, mais facteur 100 (activité moyenne),

+++ : idem, mais facteur 1 000 (bonne activité),

++++ : idem, mais facteur 10 000 (excellente activité).

On constate que, à dose suffisante, l'activité est bonne ou excellente pour la plupart des germes expérimentés et en particulier pour les germes les plus gênants qui sont difficiles à éradiquer par d'autres procédés : Listéria, Yersinia, Campylobacter.

2/ Traitement de fromages

Un lot de fromages du type pâte molle genre munster (hydratation à environ 55 %) a été traité selon le procédé de l'invention, cependant qu'on lot témoin identique était fabriqué simultanément dans les mêmes

5

conditions sans le traitement. Ces fromages ont été préparés par coagulation de lait standardisé pasteurisé (75° C, 15 s) additionné de chlorure de calcium (0,09 M), de ferments lactiques ($10^6$ cellules/ml), de Brevibacterium Linens ($10^4$ cellules/ml) et de Présure Animale (0,25 ml/l de lait). Le caillé est divisé, égoutté et placé dans des moules cylindriques leur conférant une surface de 300 cm². Après 22 heures d'égouttage, les fromages sont salés au sel sec (2 %). Chaque fromage est alors ensemencé en germes Listéria pour simuler une contamination, au moyen d'un ml d'une suspension de Listéria dont la population variait entre $10^3$ et $10^7$ bactéries par ml, cette suspension étant répartie uniformément sur la surface de chaque fromage.

La moitié des fromages ensemencés est traitée conformément à l'invention en cours de maturation en imprégnant chaque fromage par pulvérisation homogène sur toute la surface au moyen d'un ml d'une solution du système LP contenant : 20 mg/l de lactopéroxydase, 25 mg de thiocyanate de potassium et 2 mg de glucose-oxydase.

Des échantillons de fromages des lots-témoins et des lots d'essais ont été prélevés après 4 jours de maturation à 15° C (95 % d'humidité) et les populations de Listéria ont été dénombrées sur ces prélèvements par la méthode FDA avec subculture.

On constate, au terme de 4 jours de maturation, que tous les fromages traités au moyen du système LP sont rigoureusement exempts de germe Listéria, alors que les témoins présentent des nombres de germes supérieurs à $10^3$ par cm² de surface. Des analyses au terme de 7 jours de maturation ont confirmé l'absence totale de Listéria sur les fromages traités.

**Revendications**

1. Procédé de traitement d'un produit alimentaire non liquide pour assurer sa décontamination microbienne, en particulier vis-à-vis des bactéries du genre Listéria, caractérisé en ce qu'il est appliqué à un produit hydraté contenant au moins 20 % d'eau et en ce qu'il consiste à déposer sur la surface dudit produit hydraté une préparation dite système LP, comprenant un mélange d'enzyme lactopéroxydase, de thiocyanate et d'un donneur d'oxygène.

2. Procédé de traitement selon la revendication 1, caractérisé en ce que l'on dépose le système LP sur la surface du produit en imprégnant ladite surface au moyen d'une phase aqueuse dans laquelle les composants du système LP sont solubilisés et/ou dispersés.

3. Procédé de traitement selon la revendication 2, caractérisé en ce que l'imprégnation de la surface du produit est réalisée en immergeant ledit produit dans un bain de la phase aqueuse contenant le système LP.

4. Procédé de traitement selon la revendication 2, caractérisé en ce que l'imprégnation de la surface du produit est réalisée en pulvérisant sur ladite surface la phase aqueuse contenant le système LP.

5. Procédé de traitement selon la revendication 1, caractérisé en ce que l'on dépose le système LP sur la surface du produit en saupoudrant ladite surface au moyen d'une poudre contenant les composants du système LP.

6. Procédé selon l'une des revendications 1, 2, 3, 4 ou 5 pour traiter un produit alimentaire appelé à être conditionné au contact d'un emballage, caractérisé en ce que le système LP est déposé sur l'emballage en vue de venir au contact de la surface du produit lors du conditionnement.

7. Procédé de traitement selon l'une des revendications 1 à 6, caractérisé en ce que l'on dépose sur la surface du produit un système LP contenant, rapporté à 1 g d'enzyme lactopéroxydase, entre 1 et 4 g de thiocyanate et une quantité de péroxyde capable de libérer entre 0,4 et 2 g d'oxygène moléculaire.

8. Procédé de traitement selon l'une des revendications 1 à 6, caractérisé en ce que l'on dépose sur la surface du produit un système LP contenant, rapporté à 1 g d'enzyme de lactopéroxydase, entre 1 et 4 g de thiocyanate et entre 0,050 et 0,100 g de glucose-oxydase constituant le donneur d'oxygène.

9. Procédé de traitement selon l'une des revendications 7 ou 8, caractérisé en ce que l'on dépose sur la surface du produit le système LP en quantité telle que le poids d'enzymes lactopéroxydase soit compris entre $2.10^{-4}$ et $35.10^{-4}$ mg par cm² de surface du produit.

10. Procédé de traitement selon la revendication 2, caractérisé en ce que la phase aqueuse à déposer sur la surface du produit est préalablement préparée avec ajout d'au moins un agent du groupe suivant : sel tampon régulateur de pH, sel d'ionisation, agent mouillant, agent fixateur filmogène.

11. Procédé de traitement selon l'une des revendications 1 à 10, caractérisé en ce que l'on ajoute au système LP à déposer sur la surface du produit, au moins un composé du groupe suivant : lactoferrine, lysozyme, composé fongicide.

12. Application du procédé conforme à l'une des revendications 1 à 11 pour traiter la surface d'un fromage en vue d'assurer sa décontamination vis à vis des bactéries du genre Listéria.

13. Application selon la revendication 12, caractérisée en ce que le système LP à déposer sur la surface du fromage est mis en solution et/ou en suspension dans une phase aqueuse en concentration telle que le poids de lactopéroxydase par litre d'eau soit compris entre 10 et 500 mg.

14. Application selon l'une des revendications 12 ou 13 pour traiter un fromage soumis au cours de sa fabrication à une opération de salage précédant une période de maturation, caractérisée en ce que le traitement de surface au moyen du système LP est effectué au moins une fois au cours de la période de maturation.

15. Application selon la revendication 14 pour traiter un fromage à période de maturation longue supérieure à trente jours, caractérisée en ce que l'on applique un premier traitement de surface dans un délai compris entre 10 et 20 jours après salage, et au moins un autre traitement avant emballage.

16. Application selon la revendication 15 pour traiter des fromages, dits fromages à morge, comprenant une pâte molle ou une pâte molle pressée, à flore microbienne de surface.

17. Application du procédé conforme à l'une des revendications 1 à 11 pour traiter des carcasses et pièces de viande, poissons entiers et filets, crustacés.

18. Application du procédé conforme à l'une des revendications 1 à 11 pour traiter des végétaux après récolte.

**Patentansprüche**

1. Verfahren zur Behandlung eines nichtflüssigen Nahrungsmittels, um dessen mikrobielle Dekontaminierung zu gewährleisten, insbesondere von Bakterien der Gattung Listeria, dadurch gekennzeichnet, daß es auf ein hydratisiertes Produkt aufgetragen wird, das mindestens 20 % Wasser enthält, sowie darin, daß es darin besteht, auf der Oberfläche des besagten hydratisierten Produkts ein als das System LP bezeichnetes Präparat abzusetzen, wobei das besagte Präparat ein Gemisch des Enzyms Lactoperoxydase mit Thiocyanat und einem Sauerstoffspender umfaßt.

2. Behandlungsverfahren nach Anspruch 1, dadurch gekennzeichnet, daß man das System LP auf der Oberfläche des Produktes absetzt, indem man die besagte Oberfläche mit einer wäßrigen Phase imprägniert, in der die Bestandteile des Systems LP löslich gemacht und/oder dispergiert sind.

3. Behandlungsverfahren nach Anspruch 2, dadurch gekennzeichnet, daß die Imprägnierung der Oberfläche des Produkts dadurch bewirkt wird, daß man das besagte Produkt in ein Bad der das System LP enthaltenden wäßrigen Phase untertaucht.

4. Behandlungsverfahren nach Anspruch 2, dadurch gekennzeichnet, daß die Imprägnierung der Oberfläche des Produkts dadurch bewirkt wird, daß man auf die besagte Oberfläche die das System LP enthaltende wäßrige Phase aufsprüht.

5. Behandlungsverfahren nach Anspruch 1, dadurch gekennzeichnet, daß man das System LP auf der Oberfläche des Produkts absetzt, indem man die besagte Oberfläche mit einem die Bestandteile des Systems LP enthaltenden Pulver bestäubt.

6. Verfahren nach einem der Ansprüche 1, 2, 3, 4 oder 5 zum Behandeln eines Nahrungsmittels, das zum Verpacken in Kontakt mit einer Verpackung bestimmt ist, dadurch gekennzeichnet, daß das System LP auf der Verpackung abgesetzt wird, so daß es im Zuge des Verpackens mit der Oberfläche des Produkts in Kontakt kommt.

7. Behandlungsverfahren nach einem der Ansprüche 1 bis 6, dadurch gekennzeichnet, daß man auf der Oberfläche des Produkts ein System LP absetzt, das im Verhältnis zu 1 g des Enzyms Lactoperoxydase zwischen 1 und 4 g Thiocyanat und eine Perodixmenge enthält, die in der Lage ist, zwischen 0,4 und 2 g molekularen Sauerstoff abzugeben.

8. Behandlungsverfahren nach einem der Ansprüche 1 bis 6, dadurch gekennzeichnet, daß man auf der Oberfläche des Produkts ein System LP absetzt, das im Verhältnis zu 1 g des Enzyms Lactoperoxydase zwischen 1 und 4 g Thiocyanat und zwischen 0,050 und 0,100 g Glukoseoxydase als Sauerstoffspender enthält.

9. Behandlungsverfahren nach einem der Ansprüche 7 oder 8, dadurch gekennzeichnet, daß man auf der Oberfläche des Produkts das System LP in einer Menge absetzt, die so beschaffen ist, daß das Gewicht des Enzyms Lactoperoxydase zwischen $2.10^{-4}$ und $35.10^{-4}$ mg je cm² Produktoberfläche beträgt.

10. Behandlungsverfahren nach Anspruch 2, dadurch gekennzeichnet, daß die auf der Oberfläche des Produkts abzusetzende wäßrige Phase im voraus zubereitet wird, und zwar unter Zusatz von mindestens einem Mittel der folgenden Gruppe: pH-regelndes Puffersalz, Ionisationssalz, Netzmittel, fixierender Filmbildner.

11. Behandlungsverfahren nach einem der Ansprüche 1 bis 10, dadurch gekennzeichnet, daß man dem auf der Oberfläche des Produkts abzusetzenden System LP mindestens eine Verbindung der Gruppe Lactoferrin, Lysozym, Fungizidverbindung zusetzt.

12. Anwendung des Verfahrens nach einem der Ansprüche 1 bis 11 zwecks Behandlung der Oberfläche eines Käses, um zu gewährleisten, daß er von Bakterien des Genus Listeria dekontaminiert wird.

13. Anwendung nach Anspruch 12, dadurch gekennzeichnet, daß das auf der Oberfläche des Käses abzusetzende System LP in einer wäßrigen Phase in Lösung und/oder Suspension gebracht wird, und zwar in einer solchen Konzentration, daß das Gewicht der Lactoperoxydase je Liter Wasser zwischen 10 und 500 mg beträgt.

14. Anwendung nach einem der Ansprüche 12 oder 13 zwecks Behandlung eines Käses, der im Laufe seiner Fertigung einer einer Ausreifzeit vorausgehenden Einsalzoperation unterzogen wird, dadurch gekennzeichnet, daß die Oberflächenbehandlung mit dem System LP mindestens einmal im Laufe der Ausreifzeit bewirkt wird.

15. Anwendung nach Anspruch 14 zwecks Behandlung eines Käses mit einer langen Ausreifzeit von mehr als dreißig Tagen, dadurch gekennzeichnet, daß man innerhalb einer Zeitspanne von 10 bis 20 Tagen nach dem Einsalzen eine erste Behandlung und vor dem Verpacken mindestens eine weitere Behandlung bewirkt.

16. Anwendung nach Anspruch 15 zwecks Behandlung von Käsen, den sogenannten Käsekruste "morge"-Käsen, die eine weiche Paste oder eine gepreßte weiche Paste umfassen und eine mikrobielle Oberflächenflora aufweisen.

17. Anwendung des Verfahrens nach einem der Ansprüche 1 bis 11 zwecks Behandlung von Schlachtkörpern und Fleischstücken, ganzen und filetierten Fischen sowie Schalentieren.

18. Anwendung des Verfahrens nach einem der Ansprüche 1 bis 11 zwecks Behandlung von Pflanzen nach dem Ernten.

## Claims

1. Process for treating a non-liquid food product in order to ensure its microbial decontamination, in particular in respect of bacteria of the genus Listeria, characterised in that it is applied to a hydrated product containing at least 20 % water and in that it consists in depositing on the surface of said hydrated product a preparation known as the LP system and comprising a mixture of the enzyme lactoperoxydase, thiocyanate and an oxygen donor.

2. Process for treatment according to claim 1, characterised in that one deposits the LP system on the surface of the product by impregnating said surface with an aqueous phase in which the constituents of the LP system are rendered soluble and/or dispersed.

3. Process for treatment according to claim 2, characterised in that the impregnation of the surface of the product is brought about by immersing said product in a bath of the aqueous phase containing the LP system.

4. Process for treatment according to claim 2, characterised in that the impregnation of the surface of the product is brought about by spraying on said surface the aqueous phase containing the LP system.

5. Process for treatment according to claim 1, characterised in that one deposits the LP system on the surface of the product by sprinkling said surface with a powder containing the constituents of the LP system.

6. Process according to one of claims 1, 2, 3, 4 or 5 for treating a food product intended for packing in contact with a packaging material, characterised in that the LP system is deposited on the packaging material with a view to coming into contact with the surface of the product while it is being packed.

7. Process for treatment according to one of claims 1 to 6, characterised in that one deposits on the surface of the product an LP system containing, in relation to 1 g of lactoperoxydase enzyme, between 1 and 4 g of thiocyanate and a quantity of peroxide capable of releasing between 0.4 and 2 g of molecular oxygen.

8. Process for treatment according to one of claims 1 to 6, characterised in that one deposits on the surface of the product an LP system containing, in relation to 1 g of lactoperoxydase enzyme, between 1 and 4 g of thiocyanate and between 0.050 and 0.100 g of glucose oxydase constituting the oxygen donor.

9. Process for treatment according to one of claims 7 or 8, characterised in that one deposits on the surface of the product the LP system in such a quantity that the weight of the lactoperoxydase enzyme is comprised between $2x10^{-4}$ and $35x10^{-4}$ mg per cm$^2$ of product surface.

10. Process for treatment according to claim 2, characterised in that the aqueous phase which is to be deposited on the surface of the product is prepared in advance by adding to it at least one agent of the following group: pH-regulating buffer salt, ionising salt, wetting agent, film-forming fixing agent.

11. Process for treatment according to one of claims 1 to 10, characterised in that one adds to the LP system which is to be deposited on the surface of the product at least one compound pertaining to the following group: lactoferrine, lysozyme, fungicide compound.

12. Application of the process according to one of claims 1 to 11 for treating the surface of a cheese with a view to ensuring its decontamination in respect of bacteria of the genus Listeria.

13. Application according to claim 12, characterised in that the LP system which is to be deposited on the surface of the cheese is dissolved and/or suspended in an aqueous phase in a concentration such that the weight of lactoperoxydase per litre of water is comprised between 10 and 500 mg.

14. Application according to one of claims 12 or 13 for treating a cheese subjected in the process of its manufacture to a salting operation prior to a period of maturation, characterised in that the surface treatment with the aid of the LP system is carried out at least once in the course of the maturation period.

15. Application according to claim 14 for treating a cheese with a long maturation period amounting to more than thirty days, characterised in that one applies a first surface treatment within a period comprised between 10 and 20 days after salting and at least one other treatment prior to packing.

16. Application according to claim 15 for treating cheeses, i.e. so-called rind "morge" cheeses comprising a soft paste or a soft pressed paste and having a microbial surface flora.

17. Application of the process according to one of claims 1 to 11 for treating carcasses and pieces of meat, entire fishes and fillets of fish, as well as shellfishes.

18. Application of the process according to one of claims 1 to 11 for treating plants after harvesting.